# EUROPEAN PATENT APPLICATION

(11) **EP 4 696 145 A2**
(43) Date of publication of application: **18.02.2026**
(21) Application number: 25227321.4
(22) Date of filing: 27.09.2022
(51) Int. Cl.: A23K 10/30, A23K 20/111, A23K 50/90

(54) **PROANTHOCYANIDINS (CONDENSED TANNINS) AS NUTRIENT FOR HONEY BEES**

(30) Priority: 28.09.2021 BE 202105760
(62) Divisional of application: 22786813.0
(71) Applicant: APIX BIOSCIENCES, 8750 Wingene (BE)
(72) Inventor: BOGAERT, Thierry, 8750 Wingene (BE); SHAFIR, Sharoni, 8750 Wingene (BE); WRIGHT, Geraldine, 8750 Wingene (BE)
(74) Representative: Willnegger, Eva

(57) **Abstract**

Provided are methods for feeding invertebrates comprising:
▪ providing a non-pollen composition comprising a nutritionally effective amount of proanthocyanidins; and
▪ administering the non-pollen composition to invertebrates.

## Description

### BACKGROUND

Bees are very important in modern agriculture for the pollination of crops. Pollinators have recently been under threat due exposure to pesticides, increased prevalence of pathogens and parasites, and changes to landscape management that reduce the abundance of naturally occurring floral pollen.

Beekeepers have historically fed honeybee colonies with a food source that contains pollen or pollen collected in natural or agricultural ecosystems by bees. Because pollen collection is limited in availability and scale, pollen collection is costly, pollen is hard to keep fresh and pollen collected in natural or agricultural ecosystems can carry pests, diseases, and pesticides. Therefore, commercially available feeds usually do not contain pollen.

These pollen substitute compositions have already been described by the present inventors. US2019/0090507 to Apix Biosciences stresses the importance of the balance between macronutrients (protein, carbohydrate, lipids), vitamins and minerals, and some specific different phenolic compounds. However, US2019/0090507 does not disclose proanthocyanidins as bee nutrient.

Proanthocyanidins (PAs) are oligomeric or polymeric polyphenolic compounds popularly known as condensed tannings, catechin tannins (CTs), or oligomeric proanthocyanidins (OPAs) (Smeriglio et al. 2017; Dixon and Sarnala 2020; Unusan 2020). They are formed through epimerization of catechins and epicatechins (Rauf et al. 2019). PAs are produced in various plant tissues, including leaves, fruits and seeds, to protect the plant from predation; they therefore often have an astringent taste and are toxic to insects (Dixon et al. 2005). In plants, PAs constitute the second most abundant natural phenolic compounds after lignin (Li and Deinzer 2009). PAs are varied and complex molecules, that target various biological processes and exhibit a broad range of toxicological activities (Cos et al. 2004; Muema et al. 2017). Some of these processes include the ability to scavenge free radicals, chelate metal ions, inhibit pro-oxidative enzymes and lipid peroxidation. These abilities have been attributed in health care, to alleviate oxidative stress related complications in cancer, cardiovascular diseases, diabetes, cataracts, ageing, obesity and neurodegenerative diseases (de la Iglesia et al. 2010; Muema et al. 2017). PAs have also been shown to inhibit adhesion of bacteria and viruses to host cells, thus blocking subsequent proliferation and exhibiting antimicrobial effects (Mayer et al. 2008; de la Iglesia et al. 2010; Daglia 2012). Interestingly, unlike the health-promoting effects in humans, emerging evidence indicates that PAs act against a large array of taxa and insects of varying feeding ecologies, which consume leaves, wood, seeds, phloem, and other plant tissues. Even PAs-rich extracts from particular plants, which have been shown in several studies to have health-promoting effects in humans and rodents, were found to be toxic to *Drosophila* (Junior et al. 2016). Ingestion of PAs elicits deleterious effects on herbivorous insects by attacking their midgut epithelia following breakdown into free radicals (Barbehenn and Constabel 2011).

*C. sinensis* leaf extracts have potential for suppressing mosquito vector populations through interference of larval survival and development (Muema et al. 2016). Catechin is known to possess insecticidal properties (Elumalai et al. 2016). It is toxic to larvae of the red palm weevil, *Rhynchophorus ferrugineus*, in concentrations as low as 0.03 mg/g (0.003%) (Monroy et al. 2021). Catechin tannins (another name for PAs) in plant extract (*Abarema cochliocarpos* bark) have been implicated with deterrent and anti-nutritional effects on the maize weevil, *Sitophilus zeamais,* and with insecticidal effects on mosquito larvae and on adult termites (Silva et al. 2020). Sorghum is rich in flavonoids, prominent amongst them the 3-deoxyanthocyanidins, which was deterrent and toxic to phloem-feeding aphids (Kariyat et al. 2019). Phenolic compounds in nectar have generally been suspected of being repellent to bees (Hagler and Buchmann 1993; Adler 2000), and even implicated with colony mortality (Liu and Fu 2004).

EP3 881 685 A1 discloses the biological activity of a crude cactus extract and noni-puree. The extract is made by crushing the fruit, adding water and extracting an aqueous extract. However, this extraction method selects against water insoluble molecules. Proanthocyanidins are larger molecular weight polyphenols which are water insoluble. Consequently, proanthocyanidins are not present in the aqueous extract of EP3 881 685 A1 at nutritionally effective amount. Moreover, EP3 881 685 A1 does not single out and demonstrate proanthocyanidins as an active ingredient relevant to bees. There is no indication that this ingredient is responsible for the observed bee activity.

US 2021/0060115 A1 discloses polyphenolic extracts obtained by ethanolic extraction of sugar cane as animal feed. However, proanthocyanidins are larger molecular weight polyphenols which are hardly soluble in ethanol. Proanthocyanidins dissolve at only 30mg/ml in ethanol. Consequently, the extraction process disclosed in this document allows for very low contents in proanthocyanidins. There is no demonstration of any method for increasing bee performance through a nutritionally effective amount of proanthocyanidins. Secondly, US 2021/0060115 A1 discloses a complex mixture of substances including polyphenols, phytosterols, oligosaccharides, monosaccharides, disaccharides, organic acids, amino acids, peptides, proteins, vitamins and minerals. However, it is unclear what provides the observed biological effect in the disclosed assays. US 2021/0060115 A1 lists separately essentially any and all constituent of the sugar cane extract except anthocyanidin. Moreover, US 2021/0060115 A1 uses an extraction method that disfavors proanthocyanidins extraction. Therefore US 2021/0060115 A1 makes it non-obvious that proanthocyanidins are important as shown by the inventors of this invention entitled "PROANTHOCYANIDINS (CONDENSED TANNINS) AS INVERTEBRATE NUTRIENT".

JP2002 199848A states repeatedly that the purpose of the use of anthocyanidin in this patent publication is "to prevent the breeding environment (water quality) from getting worse" and not to improve the efficiency of the organism by providing a better feed as is the case in this invention entitled "PROANTHOCYANIDINS (CONDENSED TANNINS) AS INVERTEBRATE NUTRIENT'.

### SHORT DESCRIPTION OF THE INVENTION

The present inventors have surprisingly established that proanthocyanidins delivered through a pollen-free diet increase bee brood production and survival of worker bees as compared to a non-pollen bee diet without addition of proanthocyanidins.

This is the first demonstration that a bee diet with proanthocyanidins is advantageous. Hence, we have invented an improvement over the currently practiced art in enriching nutrition to bees with an ingredient from a non-pollen source, which improves bee colony health, reproduction and survival.

However, commercially available bee feed compositions do not contain proanthocyanidins in biologically significant concentrations. Consequently, the present invention is the first demonstration that the addition of proanthocyanidins to a non-pollen bee diet is advantageous.

Accordingly, a first aspect of the invention is a method for feeding invertebrates comprising:
- providing a non-pollen composition comprising a nutritionally effective amount of proanthocyanidins; and
- administering the non-pollen composition to invertebrates.

In another aspect, the nutritionally effective amount of proanthocyanidins is from 0,1 w% to 4 w% of the total weight of the diet, preferably the total dry weight of the diet of the invertebrates, preferably bees, even more preferably honey bees.

In another aspect, the nutritionally effective amount of proanthocyanidins is a daily dosage of 15 mg to 6000 mg, preferably 30 mg to 3000 mg proanthocyanidins per 30000 bees, in particular honey bees.

In another aspect, the composition is a whole invertebrate diet, part of an invertebrate diet or a dietary supplement.

In another aspect, the composition is administered to invertebrates of the *Apis* or *Bombus* genera, in particular honeybees or bumble bees.

In another aspect, the composition is administered
▪ in solid form such as a patty or in liquid form such as a solution or spray;
▪ inside or outside the hive.

In another aspect, the source of the proanthocyanidins is a non-pollen tissue of one or more a plant species selected from the group consisting of leaves, stems, roots, tubers, bark, flowers, seeds, and fruits and combinations thereof.

In another aspect, the source of the proanthocyanidins is an extract, an oil, or a refinement of a non-pollen tissue of one or more a plant species or a combination thereof.

In another aspect, the source of the proanthocyanidins is a non-pollen tissue of one or more plant species selected from the group consisting of Solanaceae, Poaceae, Vitaceae, Lauraceae, Legumes, Ericaceae, Rosaceae, Anacardiaceae, Ranunculaceae, Fabaceae, Corylaceae, Cannabaceae, Chenopodiaceae, Fagaceae, Salicaceae.

In another aspect, the source of the proanthocyanidins is a non-pollen source is selected from the group consisting of:
▪ a marine or freshwater algal species, in particular an extract, an oil or a refinement of *Eisenia bicyclis;*
▪ a marine diatom species, in particular an extract, an oil or a refinement of *Phaeodactylum tricornutum; and*
▪ a fungus, in particular an extract, an oil or a refinement of *Saccharomyces cerevisiae,* or *Yarrowia lipolytica.*

In another aspect, the proanthocyanidins are chemically or enzymatically synthesized or obtained by genetically modified host organisms such as fungi, bacteria, or algae.

In another aspect, the source of the proanthocyanidins is selected from the group consisting of algae, plant, fungus, algae, diatom and combinations thereof and wherein source of the proanthocyanidins is a non-pollen tissue. Table 1 shows some examples of sources. Some of these sources include the bran of red rice, of sumac or black sorghum, or of any grain, chokeberry, blueberry and other berries, apples, grapes, grape seeds, including extracts of any of these, and various cultivars or varieties of any of these., HOPS AND HEMP.

In another aspect, the proanthocyanidins are provided to a eusocial bee colony from a synthetic source.

In another aspect, the proanthocyanidins are provided as part of a pollen substitute composition, wherein the pollen substitute composition comprises:
▪ proteins in an amount from 10 w% to 50 w%, preferably of 20 w% to 40 w%,
▪ fatty acids in an amount from 1 w% to 20 w%, preferably of 5 w% to 15 w%,
▪ carbohydrates in an amount from 30 w% to 90 w%, preferably of 5 w% to 15 w%,
▪ optionally vitamins, and
▪ optionally minerals,
wherein the total amount of components and optionally further components add up to 100 w% and wherein the w% are related to the total dry weight of the composition.

In another preferred aspect, the proanthocyanidins are provided as part of a pollen substitute composition, wherein the pollen substitute composition comprises:
▪ proteins in an amount from 0,001 w% to 50 w%, preferably from 0,05 to 50 w%, preferably of 15 w% to 40 w%,
▪ fatty acids in an amount from 0,001 w% to 20 w%, preferably from 0,05 to 20 w%, preferably of 5 w% to 15 w%,
▪ carbohydrates in an amount from 20 w% to 90 w%, preferably of 30 w% to 70 w%,
▪ optionally vitamins, and
▪ optionally minerals,
wherein the total amount of components and optionally further components add up to 100 w% and wherein the w% are related to the total dry weight of the composition and whereby the administered amount of proanthocyanidins and the dose of diet administered is then adjusted to reach the desired dose of proanthocyanidins per day and per number of bees.

In an embodiment for a beehive of 30000 bees a dose of 15 mg to 6000 mg proanthocyanidins is administered per day. Administration can be daily, weekly, every two weeks or monthly or any other suitable interval, in which case the number of days of the selected interval is multiplied by the daily dose of 15 mg to 6000 mg. In a preferred embodiment, the daily dose is 30 mg to 3000 mg of proanthocyanidins per day per colony of 30000 bees. If the colonies are larger or smaller the dose is accordingly adjusted.

In another embodiment, the pollen substitute composition is a concentrated patty consisting of appetite inducing materials
▪ proteins in an amount from 0, 001 w% to 50w%, preferably from 0,05 to 50 w%, preferably of 15 w% to 40 w%,
▪ fatty acids in an amount from 0,001 w% to 20 w%, preferably from 0,05 to 20 w%, preferably of 5 w% to 15 w%,
▪ carbohydrates in an amount from 5 w% to 90 w%, preferably of 30 w% to 70 w%,
▪ optionally vitamins, and
▪ optionally minerals,
▪ and a concentration of pro-anthocyanidin of 0,1 w% to 20 w%
wherein the total amount of components and optionally further components add up to 100 w% and wherein the w% are related to the total dry weight of the composition and whereby the administered dose of diet administered is then adjusted to reach the desired dose of proanthocyanidins per day and per number of bees.

In an embodiment for a beehive of 30000 bees a dose of 15 mg to 6000 mg proanthocyanidins administered per day. Administration can be daily, weekly, every two weeks or monthly or any other suitable interval, in which case the number of days of the selected interval is multiplied by the daily dose of 15 mg to 6000 mg per 30000 bees. In a preferred embodiment, the daily dose is 30 mg to 3000 mg of proanthocyanidins per day per colony of 30000 bees. If the colonies are larger or smaller the dose is accordingly adjusted.

In another aspect, the composition comprises of proanthocyanidins in an amount
▪ from 100-50,000 micrograms/g, preferably from 200 micrograms/g to 30,000 micrograms/g and even more preferably from 300 micrograms/g to 15,000 micrograms/g of the dry weight of the pollen substitute composition, or
▪ from 0.01 w% to 5 w%, preferably from 0.02 w% to 3 w%, and even more preferably from 0.03 w% to 1.5 w%.

In another aspect, the composition is essentially free of pollen.

**Table 1. Examples of potential sources of proanthocyanidins.**

| Food source | Total PAs (mg/100g wet) | Moisture (%) | Total PAs (mg/100g dry) | Total PAs (% dry) | Phenolic acid (mg of GAE/g) | Reference |
|---|---|---|---|---|---|---|
| Black sorghum bran | | | | | 23.4 | Burdette et al. 2010 |
| Brown seaweed (*Eisenia bicyclis*) | | | | | 193 | (Machu et al. 2015) |
| Sumac sorghum bran | 3,965.4 | 9.2 | 4,367.2 | 4.4 | 62.5 | (Gu et al. 2004); (Burdette et al. 2010) |
| Grape seed (dry) | 3523.3 | 0 | 3,523.3 | 3.5 | | Gu et al. 2004 |
| Grape seed extract (dry) | | | | 76-99 | | (Kuhnert et al. 2015) |
| Cinnamon (ground) | 8108.2 | 9.5 | 8,959.3 | 9.0 | | Gu et al. 2004 |
| Pinto beans (raw) | 796.3 | 11 | 894.7 | 0.9 | | Gu et al. 2004 |
| Blueberries | 267 - 331.9 | 85 - 85.5 | 1,841.4 - 2,212.7 | 1.8 - 2.2 | | (Gu et al. 2004; Hellstrom et al. 2009) |
| Green grapes | 30.5 - 81.5 | 80.7 - 85.2 | 206.1 - 422.3 | 0.2 - 0.4 | | (Gu et al. 2004; Hellstrom et al. 2009) |
| Blackberries | 27 | 86.9 | 206.1 | 0.2 | | Gu et al. 2004 |
| Granny Smith apples | 72 - 141 | 85.5 - 85.7 | 496.6 - 986.0 | 0.5 - 1.0 | | (Gu et al. 2004; Hellstrom et al. 2009) |
| Red Delicious apples | 154.0 | 86.3 | 1,124.1 | 1.1 | | (Hellstrom et al. 2009) |
| Chokeberry | 1,730.0 | 79.7 | 8,522.2 | 8.5 | | (Hellstrom et al. 2009) |
| Red rice bran | | | 2,470.0 | 2.5 | | (Gunaratne et al. 2013) |
| Hops | | | | 0.5-5.0 | | (Neve 1991; Li and Deinzer 2006) |
| Hemp seed cake | | | 262.0 | 0.3 | | (Pap et al. 2020) |
| Poplar tree stems | | | 380 - 470 | 0.4 - 0.5 | | (Ullah et al. 2019) |
| Pine tree needles extract | | | 36,000 | 36 | | (Kim et al. 2010) |
| Pine tree bark extract | | | 48,900 | 48.9 | | (Ku et al. 2007) |

### SHORT DESCRIPTION OF THE DRAWINGS

Figure 1 shows the choice of cohorts of bees of diet with or without proanthocyanidins.
Figure 2 shows represents the survival of cohorts of bees confined to feed on diets containing specific concentrations of proanthocyanidins, either during larval development (A) or as newborn adults (B).
Figure 3 shows the influence of proanthocyanidins in bee diet on number of capped brood produced.

### DETAILED DESCRIPTION OF THE INVENTION

Embodiments of the present inventions are described hereinafter.

### Proanthocyanidins

Examples of the structures of the flavan-3-ol building blocks of proanthocyanidins (1-2) and of simple B-type proanthocyanidins (3-6) (I):

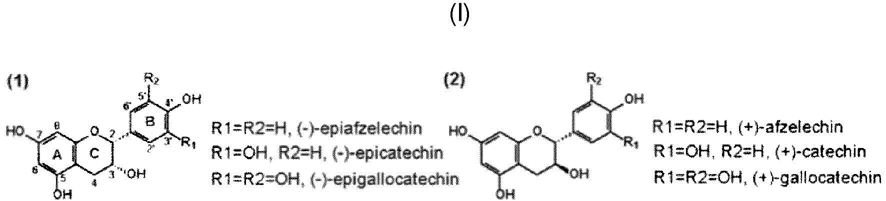

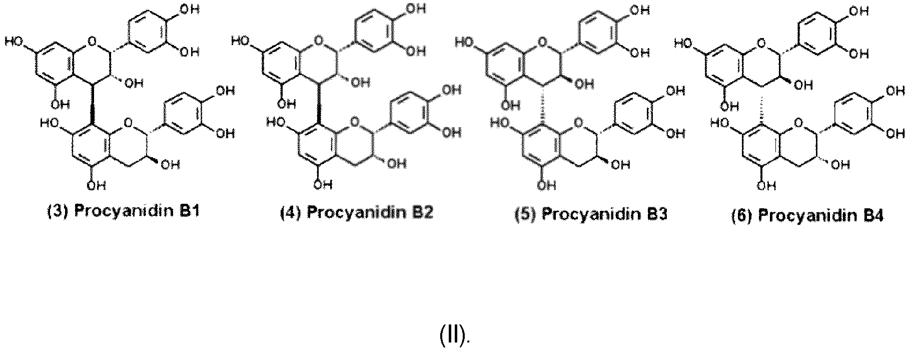

### Proanthocyanidins as insect nutrient

The present inventors have surprisingly found that proanthocyanidins are a beneficial bee nutrient.

### Non-pollen composition

The feature "non-pollen" means essentially free of pollen. However, minor amounts of pollen may be present in the compositions of the present inventions. In one embodiment, the amount of pollen is 15 w% or less, preferably 10 w% or less, even more preferably 5 w% or less and even more preferably 1 w% or less and even more preferably 0.1 w% or less as compared to the dry weight of the composition. The terms "non-pollen" and "pollen-substitute" are used interchangeably.

### Non-pollen sources of Proanthocyanidins

Proanthocyanidins may be obtained from non-pollen sources for example through
▪ synthetic chemical synthesis; or
▪ any non-pollen plant source.

Examples non-pollen plant sources of proanthocyanidins include plant, alga, fungus, or bacteria, which contain proanthocyanidins.

In one embodiment, the non-pollen sources naturally contain proanthocyanidins.

In another embodiment, the non-pollen sources of proanthocyanidins are metabolically engineered to produce proanthocyanidins.

### Invertebrates

Invertebrates include
▪ arthropods, such as insects, arachnids, crustaceans, and myriapods,
▪ molluscs, such as chitons, snail, bivalves, squids, and octopuses,
▪ annelid, such as earthworms and leeches; and
▪ cnidarians, such as hydras, jellyfishes, sea anemones, and corals.

Preferred invertebrates are invertebrates that are cultured or farmed for purposes of human or animal nutrition such as bees, bumble bees, earthworms, meal worms, shrimps, prawns or crayfish, crickets and fly larvae. Particularly preferred invertebrates are those of the Apidae family which are used as pollinators for agricultural or horticultural plants, such as
▪ bees of the genus *Apis* and in particular *Apis mellifera* or
▪ bumble bees of the genus *Bombus* and in particular *Bombus terrestris*
▪ stingless honeybees of the tribe Meliponini

### Dosage and concentration

The proanthocyanidins are administered in an amount that is nutritionally effective for bees.

In one embodiment, nutritionally effective means a concentration of proanthocyanidins in an amount:
▪ from 500-50,000 micrograms/g, preferably from 200 micrograms/g to 30,000 micrograms/g and even more preferably from 300 micrograms/g to 15,000 micrograms/g of the dry weight of the pollen substitute composition, or
▪ from 0.05 w% to 5 w%, preferably from 0.02 w% to 3 w%, and even more preferably from 0.03 w% to 1.5 w%.

In one embodiment, nutritionally effective means a concentration of proanthocyanidins in an amount from 0.01 w% to 5 w% of the diet, preferably from 0.01 w% to 1 w% as a percentage of the total weight of the pollen substitute composition. In another embodiment, the concentration of proanthocyanidins or mixtures thereof is from 0.03 w% to 0.5 w% for honeybees or 0.03 w% to 0.8 w% for bumblebees as a percentage of the total weight of the pollen substitute composition.

In another embodiment, the dosage of proanthocyanidins that a beekeeper would use for a colony of honeybees should be approximately 0.1 w% to 0.5 w% of the total weight of the diet. If each nurse bee weighs 120mg and consumes 10 mg to 15 mg of food per day, and if a colony of bees is made up of approximately 50% nurse or young adult worker bees, this would usually be between 5-25 mg of proanthocyanidins per colony per day.

In another preferred embodiment, the dosage of proanthocyanidins is approximately 0,1 w% to 4 w% of the total weight, preferably of the total dry weight, the total diet of the invertebrates, in particular the honeybees.

In an even more preferred embodiment for a beehive of 30000 bees, a dose of 15 mg to 6000 mg proanthocyandins are administered per day. Administration can be daily, weekly, every two weeks or monthly or any other suitable interval, in which case the nr of day of the selected interval is multiplied by the daily dose of 15 mg to 6000 mg.

In another preferred embodiment, the daily dose is 30 mg to 3000 mg of proanthocyanidins per day per colony of 30000 bees. If the colonies are larger the dose is accordingly adjusted.

In another embodiment, for a bumblebee colony composed of 300 bees, the diet should include proanthocyanidins in quantities of 0.3 w% to 0.8 w% of the total weight of the diet. If each bumblebee weighs approximately 200 mg and consumes 20 mg of food per day, and if all bees consume the food, then the nutritionally effective dose of proanthocyanidins is 2 mg to 5 mg per day per colony.

### Example 1 - Preference essay: Bees prefer specific concentrations of proanthocyanidins in foods.

Newly emerged adult worker honeybees (*Apis mellifera*) or adult worker bumblebees (*Bombus terrestris*) were tested in a two-choice preference assay in which bees had access to two diets and *ad libitum* access to water.

One treatment diet contained the proanthocyanidins and the other contained no proanthocyanidins. Newly emerged bees were removed from the brood frame and cohorts of 30 bees per replicate were housed in plastic rearing cages. In all experiments, 10 cohorts of ~30 bees each were used for each treatment group. In all diets carbohydrate was maintained at 60% using sucrose and fat was maintained at 8%. In one replicate the diet contained no protein, in another replicate the diet was protein-enriched. Consumption of each diet was measured every 24 h for 4 days. Preference index was calculated as (amount of treatment consumed - amount of control consumed)/(total amount of food consumed).

In Example 1, cohorts of bees were given a choice of diet with or without proanthocyanidins. A. Protein-free diets: bees preferred to consume food that contained proanthocyanidins in the diet at concentration of 0.01% - 0.05%. B. Protein-enriched diet: bees preferred to consume food that contained proanthocyanidins in the diet at most concentrations of 0.01% or above (but not at 0.05% or 0.1% at 24 h).

### Example 2 - Survival: bees live longer on foods containing proanthocyanidins

Two different replicates were conducted. In the first, brood frames were taken from colonies that had been fed diet treatments containing 0.1% or 1% proanthocyanidins. Newly emerged bees were removed from the brood frame and cohorts of 30 bees per replicate were housed in plastic rearing cages, with *ad libitum* access to water and to sucrose solution. In the second replicate, newly emerged bees were removed from the brood frames of untreated colonies and cohorts of 30 bees per replicate were housed in plastic rearing cages, with a protein-enriched diet treatment containing 0, 0.1%, or 1% proanthocyanidins and *ad libitum* access to water. In all experiments, 10 cohorts of ~30 bees each were used for each treatment group.

In all diets carbohydrate was maintained at 60% using sucrose and fat was maintained at 8%. Consumption of each diet was measured every day over the course of the experiment. The number of bees alive in the box was counted each day for 30 days.

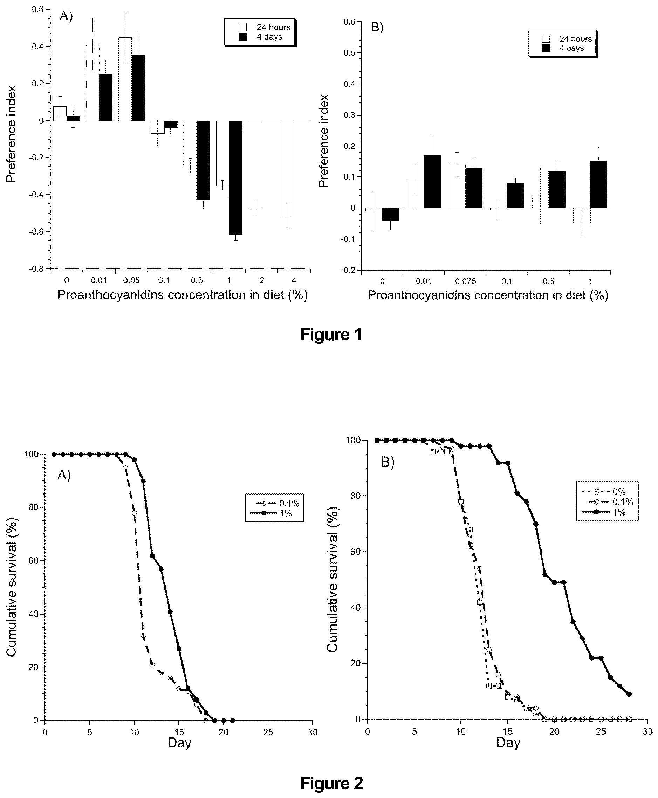

Example 2 represents the survival of cohorts of bees confined to feed on diets containing specific concentrations of proanthocyanidins (0%, 0.1% and 1% weight of diet), as shown in Figure 2. A: Bees were raised on the diets only during the larval stage. B: Bees were raised on the diets as adults, from day one as newborn adults.

### Example 3 - Brood production: Honeybees produce more brood with proanthocyanidins.

Honeybees: Fully functional insulated styrofoam APIDEA nucs comprised 5 mini frames populated with adult workers and 1 mated laying queen bee were populated with 300-400 ml of young adult workers (~ N<1,000 bees of mixed ages).

The colony was located in an enclosed glasshouse with ventilation which did not permit the honeybees to forage on nectar or pollen. Each treatment was tested with 3-6 colonies; each colony was fed with a 60-100g patty (solid diet) on the top feeder fitted with a mesh floor. Diet was fed on the first day and again on day 6; the quantity consumed was measured on day 6 and day 15. If no larvae or eggs/queen are observed by day 6 then the experiment is terminated. The number of capped brood cells was counted on day 15. Sugar syrup (34%) and water was provided in feeders inside the tent to prevent carbohydrate starvation and to stimulate foraging activity.

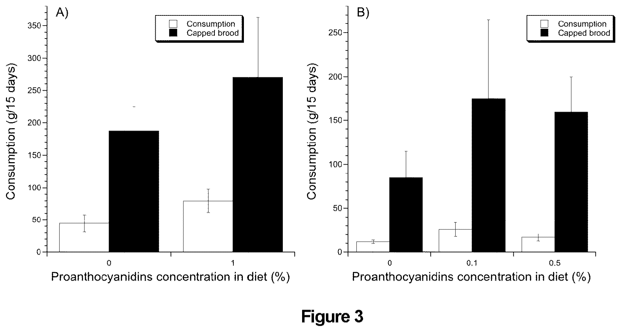

In Example 3, bees were fed with a diet containing 10-18% protein, 6% fat, 1% vitamins/minerals and > 75% carbohydrates. In one replicate, colonies were fed with 0% or 1% added proanthocyanidins. In another replicate, colonies were fed with 0%, 0.1% or 0.5% added proanthocyanidins. In both cases, the addition of proanthocyanidins increased both consumption and number of capped brood, with a peak that varied between at 0.1% to 1%, in the two replicates, respectively, as shown in Figure 3.

## Claims

1. A method for feeding invertebrates comprising:
▪ providing a non-pollen composition comprising a nutritionally effective amount of proanthocyanidins in polymeric form, in oligomeric form, in catechin form, in epicatechin form, in epi-gallocatechin form, in gallocatechin form, in epiafzelechin form, or in afzelechin form, and
▪ administering the non-pollen composition to invertebrates,
wherein the non-pollen composition is administered to honey bees (Apini),
wherein the proanthocyanidins are provided as part of a non-pollen composition,
wherein the non-pollen composition comprises:
a. proteins in an amount from 10 w% to 50 w%, preferably from 20 w% to 40 w%,
b. fatty acids in an amount from 1 w% to 20 w%, preferably from 4 w% to 12 w%,
c. carbohydrates in an amount from 5 w% to 90 w%, preferably from 30 w% to 70 w%,
d. optionally vitamins, and
e. optionally minerals,
wherein the amount of pollen is 15 w% or less,
wherein the total amount of components a) to e) and optionally further components add up to 100 w%,
wherein the nutritionally effective amount of proanthocyanidins is up to 1 w% of the total weight of the non-pollen composition,
wherein the w% are related to the total dry weight of the composition.

2. The method of claim 1, wherein the proanthocyanidin is Procyanidin B1, Procyanidin B2, Procyanidin B3 and/or Procyanidin B4.

3. The method of any one of the preceding claims, wherein the composition is administered
▪ in solid form such as a patty or in liquid form such as a solution or spray;
▪ inside or outside the hive.

4. The method of any one of the preceding claims, wherein the nutritionally effective amount of proanthocyanidins is a daily dosage to a colony of 30,000 of 15 mg to 6000 mg.

5. The method of any one of the preceding claims, wherein the composition is a whole invertebrate diet, part of an invertebrate diet or a dietary supplement.

6. The method of any one of the preceding claims, wherein the source of the proanthocyanidins is a non-pollen tissue of one or more plant species selected from the group consisting of leaves, stems, roots, tubers, flowers, seeds, barks and fruits and combinations thereof.

7. The method of any one of the preceding claims, wherein the source of the proanthocyanidins is an extract, an oil, or a refinement of a non-pollen tissue of one or more a plant species or a combination thereof.

8. The method of any one of the preceding claims, wherein the source of the proanthocyanidins is a non-pollen tissue of one or more plant species selected from the group consisting of Solanaceae, Poaceae, Ranunculaceae, Fabaceae, Corylaceae, and Vitaceae.

9. The method of any one of the preceding claims, wherein the source of the proanthocyanidins is a non-pollen source selected from the group consisting of:
▪ a marine or freshwater algal species, in particular an extract, an oil or a refinement of *Ulva lactuca;*
▪ a marine diatom species, in particular an extract, an oil or a refinement of *Thalassiosira pseudonana, Thalassiosira rotula,* or *Chaetoceros muelleri; and*
▪ a fungus, in particular an extract, an oil or a refinement of a yeast such as *Saccharomyces cerevisiae,* or *Yarrowia lipolytica.*

10. The method of any one of the preceding claims, wherein the proanthocyanidins are chemically or enzymatically synthesized or obtained by genetically modified host organisms such as fungi, bacteria, or algae.

11. The method of any one of the preceding claims, wherein the source of the proanthocyanidins is selected from the group consisting of algae, plant, fungus, algae, diatom and combinations thereof and wherein source of the proanthocyanidins is a non-pollen tissue.

12. The method of any one of the preceding claims, wherein proanthocyanidins is provided to a eusocial bee colony from a synthetic source.

13. The method of any one of the preceding claims, wherein the composition is essentially free of pollen.
